# EUROPEAN PATENT APPLICATION

(11) **EP 4 550 498 A1**
(43) Date of publication of application: **07.05.2025**
(21) Application number: 24203424.7
(22) Date of filing: 29.09.2024
(51) Int. Cl.: H01M 10/04, H01M 50/107, H01M 50/533, H01M 50/536, H01M 50/188, H01M 50/538

(54) **CELL, BATTERY PACK, AND POWER CONSUMPTION DEVICE**

(30) Priority: 31.10.2023 CN 202322946527 U
(71) Applicant: BYD Company Limited, Shenzhen, Guangdong 518118 (CN)
(72) Inventor: Jia, Xiaohui, Shenzhen, 518118 (CN); Xu, Hang, Shenzhen, 518118 (CN); Huang, Shan, Shenzhen, 518118 (CN); Tang, Wenlin, Shenzhen, 518118 (CN); Ni, Jie, Shenzhen, 518118 (CN)
(74) Representative: Mathys & Squire

(57) **Abstract**

The present disclosure discloses a cell, a battery pack, and a power consumption device. The cell includes: a housing, an accommodating cavity being formed in the housing, a battery post being arranged on an end of the housing, and the battery post being insulated from the housing; a pole core, the pole core being mounted in the accommodating cavity, and a first tab and a second tab being arranged on an end portion of the pole core corresponding to the battery post; and a current collecting disk, the current collecting disk being sandwiched between the housing and the end portion of the pole core, an avoiding through hole being formed in the current collecting disk, the first tab passing through the avoiding through hole and being conductively connected to the battery post, and the current collecting disk being conductively connected to the second tab and the housing respectively. This helps reduce a quantity of parts, reduce mounting difficulty, and improve a yield rate of the cell, and helps improve practicality of the cell.

## Description

### FIELD

The present disclosure relates to the field of battery technologies, and specifically, to a cell, a battery pack, and a power consumption device.

### BACKGROUND

In a related art, a cylindrical battery pack includes a pole core and a housing. A positive electrode plate and a negative electrode plate are arranged on a same end of the pole core. The positive electrode plate and the negative electrode plate are arranged symmetrically in a radial direction of the pole core. A battery post is arranged on the housing. The positive electrode plate is electrically connected to the housing through a bus plate. The negative electrode plate is electrically connected to the battery post through the bus plate and is separated from the positive electrode plate through an insulating plate. A quantity of parts is relatively large, mounting difficulty is high, a yield rate is low, and there is an improved space.

### SUMMARY

The present disclosure aims to resolve at least one of the technical problems in the related art. Therefore, an objective of the present disclosure is to provide a cell with a small quantity of parts, low mounting difficulty, and a high yield rate of the cell.

The cell according to embodiments of the present disclosure includes: a housing, an accommodating cavity being formed in the housing, a battery post being arranged on an end of the housing, and the battery post being insulated from the housing; a pole core, the pole core being mounted in the accommodating cavity, and a first tab and a second tab being arranged on an end portion of the pole core corresponding to the battery post; and a current collecting disk, the current collecting disk being sandwiched between the housing and the end portion of the pole core, an avoiding through hole being formed in the current collecting disk, the first tab passing through the avoiding through hole and being conductively connected to the battery post, and the current collecting disk being conductively connected to the second tab and the housing respectively.

According to the cell in the embodiments of the present disclosure, the first tab is set to be directly conductively connected to the battery post, and the second tab is set to be conductively connected to the housing through the current collecting disk. This helps reduce a quantity of parts, reduce mounting difficulty, and improve a yield rate of the cell, and helps improve practicality of the cell.

According to the cell in some embodiments of the present disclosure, a connecting protrusion protruding toward the housing is arranged on a first side wall of the current collecting disk, and the connecting protrusion is conductively connected to the housing.

According to the cell in some embodiments of the present disclosure, an avoiding space is provided between the first side wall of the current collecting disk and an inner wall of the housing, a through hole is provided on the current collecting disk, and the second tab extends into the avoiding space through the through hole and is conductively connected to the first side wall.

According to the cell in some embodiments of the present disclosure, a part of the second tab conductively connected to the first side wall is located on a side of the through hole facing away from a center of the pole core.

According to the cell in some embodiments of the present disclosure, a protruding height of the connecting protrusion is f, a thickness of the second tab is h, and f satisfies: f>h+0.5 mm.

According to the cell in some embodiments of the present disclosure, a thickness of the connecting protrusion ranges from 2 mm to 3 mm.

According to the cell in some embodiments of the present disclosure, the second tab is located on a side of the first tab facing away from a center of the pole core, and the avoiding through hole is formed in a middle portion of the current collecting disk.

According to the cell in some embodiments of the present disclosure, a plurality of first tabs are arranged at intervals in a circumferential direction of the pole core; and/or a plurality of second tabs are arranged at intervals in the circumferential direction of the pole core.

According to the cell in some embodiments of the present disclosure, extended positions of the plurality of first tabs are located on a first circle, and a radian of each first tab ranges from 0.35 rad to 0.45 rad; and/or extended positions of the plurality of second tabs are located on a second circle, and a radian of each second tab ranges from 0.35 rad to 0.45 rad.

According to the cell in some embodiments of the present disclosure, a winding center hole is formed in the pole core, and at least a part of at least one first tab covers at least a part of the winding center hole.

According to the cell in some embodiments of the present disclosure, each first tab has a covering portion covering the winding center hole, a plurality of covering portions overlap, and the battery post is conductively connected to the covering portions.

According to the cell in some embodiments of the present disclosure, the pole core is cylindrical, a radius of the pole core is R, a radius of the winding center hole is r, an extension length of the first tab is L1, and L1 satisfies: L1=R*a1+a2*r. a1 ranges from 0.35 to 0.45, and a2 ranges from 1.1 to 1.5.

According to the cell in some embodiments of the present disclosure, each second tab is bent in a direction facing away from the center of the pole core and is attached to a side of the current collecting disk away from the pole core.

According to the cell in some embodiments of the present disclosure, the pole core is cylindrical, a radius of the pole core is R, an extension length of the second tab is L2, and L2 satisfies: L2=a3*R. a3 ranges from 0.2 to 0.3.

According to the cell in some embodiments of the present disclosure, a radius of the pole core is R, extended positions of the plurality of first tabs are located on a first circle, extended positions of the plurality of second tabs are located on a second circle, a radius of the first circle is r1, a radius of the second circle is r2, and r1 and r2 satisfy: r1=R*a4, and r2=R*a5. a4 ranges from 0.35 to 0.45, and a5 ranges from 0.65 to 0.75.

The present disclosure further provides a battery pack.

The battery pack according to the embodiments of the present disclosure includes: the cell according to any one of the foregoing embodiments and a housing. The cell is arranged in the housing.

The present disclosure further provides a power consumption device.

The power consumption device according to the embodiments of the present disclosure includes: the battery pack according to any one of the foregoing embodiments or the cell according to any one of the foregoing embodiments, and a power consumption body. The battery pack or the cell is arranged in the power consumption body.

Compared to the related art, advantages of the battery pack, the power consumption device, and the cell are the same. Details are not described herein again.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings.
FIG. 1 is a cross-sectional view of a cell according to an embodiment of the present disclosure;
FIG. 2 is an exploded view of a cell according to an embodiment of the present disclosure;
FIG. 3 is a schematic diagram of a pole core according to an embodiment of the present disclosure; and
FIG. 4 is a schematic diagram of mounting of a pole core and a current collecting disk according to an embodiment of the present disclosure.

In the drawings:
Cell 100,
housing 1, main body part 11, welding groove 111, cover plate part 12, battery post 13,
pole core 2, first tab 21, second tab 22, winding center hole 23,
current collecting disk 3, first side wall 3a, avoiding through hole 31, connecting protrusion 32, through hole 33, avoiding space 4, insulating spacer 5, and insulating sleeve 6.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary and used merely for explaining the present disclosure, and should not be construed as a limitation on the present disclosure.

The following describes a cell 100 according to the embodiments of the present disclosure with reference to the accompanying drawings.

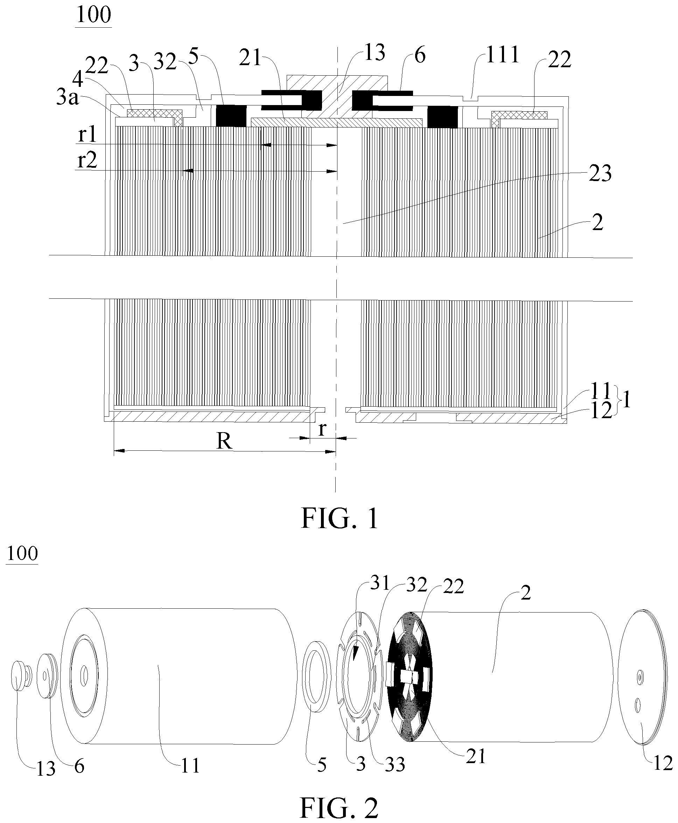

As shown in FIG. 1 to FIG. 4, the cell 100 according to the embodiments of the present disclosure includes: a housing 1, a pole core 2, and a current collecting disk 3. An accommodating cavity is formed in the housing 1, a battery post 13 is arranged on an end of the housing 1, and the battery post 13 is insulated from the housing 1. The pole core 2 is mounted in the accommodating cavity, and a first tab 21 and a second tab 22 are arranged on an end portion of the pole core 2 corresponding to the battery post 13. The current collecting disk 3 is sandwiched between the housing 1 and the end portion of the pole core 2, an avoiding through hole 31 is formed in the current collecting disk 3, the first tab 21 passes through the avoiding through hole 31 and is conductively connected to the battery post 13, and the current collecting disk 3 is conductively connected to the second tab 22 and the housing 1 respectively.

This helps reduce a quantity of parts, reduce mounting difficulty, and improve a yield rate of the cell 100. In addition, processing costs can be reduced, which helps improve practicality of the cell 100.

For example, referring to FIG. 1 to FIG. 4, the cell 100 includes a housing 1. The housing 1 is constructed as a cylinder. The housing 1 includes a main body part 11 and a cover plate part 12. The main body part 11 is constructed as a cylinder. An accommodating cavity with an open end is formed in the main body part 11. The cover plate part 12 covers the open end of the main body part 11 and is configured to close the accommodating cavity. A battery post 13 is arranged on the other end of the main body part 11, the battery post 13 runs through the main body part 11 in an axial direction, and the battery post 13 is insulated from the main body part 11 through an insulating sleeve 6. One of the battery post 13 and the housing 1 leads out of the positive electrode and the other of the battery post 13 and the housing 1 leads out of the negative electrode.

The cell 100 further includes a pole core 2 and a current collecting disk 3. The pole core 2 matches the accommodating cavity. The pole core 2 is configured to be mounted in the accommodating cavity. A first tab 21 and a second tab 22 are arranged on an end of the pole core 2 corresponding to the battery post 13. The second tab 22 is spaced. One of the first tab 21 and the second tab 22 is a positive tab and the other of the first tab 21 and the second tab 22 is a negative tab. The current collecting disk 3 is sandwiched between the housing 1 and an end portion of the pole core 2. An avoiding through hole 31 is provided in the current collecting disk 3. The avoiding through hole 31 is opposite to the battery post 13 and the first tab 21. The first tab 21 passes through the avoiding through hole 31 and is connected to the battery post 13 through welding. For example, the first tab 21 may be connected to the battery post 13 through ultrasonic welding, so that the first tab 21 is conductively connected to the battery post 13. It may be understood that the first tab 21 needs to pass through the avoiding through hole 31 in an insulation manner, to avoid short-circuiting between the first tab 21 and the current collecting disk 3. For example, the first tab 21 is not in contact with an inner wall of the avoiding through hole 31, or an insulating member is arranged between the first tab 21 and the avoiding through hole 31. The current collecting disk 3 faces the second tab 22 and is connected to the second tab 22 through welding, and the current collecting disk 3 may be connected to an end surface of the housing 1 through welding, so that the second tab 22 may be conductively connected to the housing 1 through the current collecting disk 3. It should be noted that the housing 1 and the current collecting disk 3 may be welded in a keyhole welding manner.

According to the cell 100 in the embodiments of the present disclosure, the first tab 21 is set to be directly conductively connected to the battery post 13, and the second tab 22 is set to be conductively connected to the housing 1 through the current collecting disk 3. This helps reduce a quantity of parts, reduce mounting difficulty, and improve a yield rate of the cell 100, and helps improve practicality of the cell 100.

In some embodiments of the present disclosure, a connecting protrusion 32 protruding toward the housing 1 is arranged on a first side wall 3a of the current collecting disk 3, and the connecting protrusion 32 is conductively connected to the housing 1. For example, referring to FIG. 1 to FIG. 4, a side of the current collecting disk 3 facing the housing 1 may be set to a first side wall 3a. A connecting protrusion 32 is arranged on the first side wall 3a. The connecting protrusion 32 is constructed as a ring structure. The connecting protrusion 32 surrounds the avoiding through hole 31 and protrudes toward the housing 1. After the pole core 2 is mounted in the accommodating cavity, the connecting protrusion 32 may abut against an inner wall of the housing 1 and is connected to the housing 1 through welding, so as to implement a conductive connection between the current collecting disk 3 and the housing 1. In this way, large-area contact between the current collecting disk 3 and the housing 1 can be avoided, thereby improving connection stability between the current collecting disk 3 and the housing 1.

Further, as shown in FIG. 2, the connecting protrusion 32 may be set to extend along an edge of the avoiding through hole 31. This helps simplify a structure of the current collecting disk 3 and reduce processing difficulty of the current collecting disk 3.

In an actual arrangement, as shown in FIG. 1 and FIG. 2, a welding groove 111 may be provided on a side of the housing 1 facing away from the accommodating cavity, the welding groove 111 is constructed as a ring shape, and the welding groove 111 faces the connecting protrusion 32. After the pole core 2 is mounted in the accommodating cavity, keyhole welding may be performed on the current collecting disk 3 at the welding groove 111, to implement a connection between the housing 1 and the current collecting disk 3.

In some embodiments of the present disclosure, an avoiding space 4 is provided between the first side wall 3a of the current collecting disk 3 and an inner wall of the housing 1, a through hole 33 is provided on the current collecting disk 3, and the second tab 22 extends into the avoiding space 4 through the through hole 33 and is conductively connected to the first side wall 3a.

For example, referring to FIG. 1 and FIG. 2, the first side wall 3a of the current collecting disk 3 and the inner wall of the housing 1 are spaced apart from each other and jointly define an avoiding space 4. A through hole 33 is provided on the current collecting disk 3 corresponding to the avoiding space 4, and the through hole 33 matches the second tab 22, so that the second tab 22 may extend from a side of the current collecting disk 3 facing the pole core 2 into the avoiding space 4 through the through hole 33. The second tab 22 is adapted to fall onto the first side wall 3a of the current collecting disk 3 in a radial direction and is connected to the current collecting disk 3 through welding, to implement a conductive connection between the current collecting disk 3 and the second tab 22. Through the foregoing arrangement, welding difficulty between the current collecting disk 3 and the second tab 22 can be reduced, thereby facilitating welding quality detection, helping avoid false welding and leaky welding, and improving quality of the cell 100.

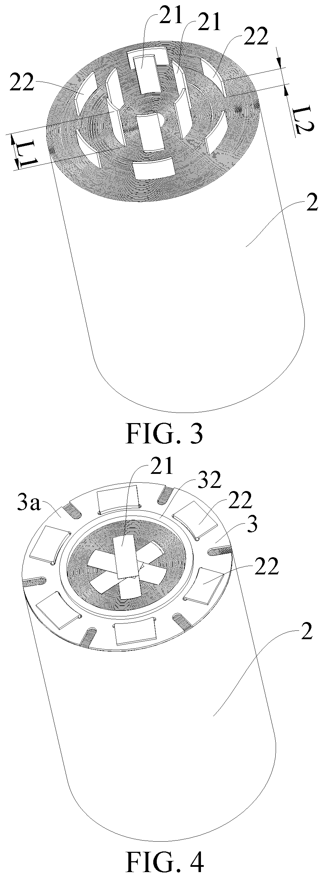

In some embodiments of the present disclosure, a part of the second tab 22 conductively connected to the first side wall 3a is located on a side of the through hole 33 facing away from a center of the pole core 2. For example, referring to FIG. 4, the second tab 22 is spaced on a side of the first tab 21 facing away from a center of the pole core 2, an avoiding through hole 31 is provided in a middle portion of the current collecting disk 3, and the first tab 21 passes through the avoiding through hole 31 in an insulation manner and is connected to the battery post 13 through welding. The second tab 22 may fall outward in a radial direction, so that a part of the second tab 22 conductively connected to the first side wall 3a is located on a side of the through hole 33 facing away from the center of the pole core 2, to avoid a case that the second tab 22 falls inward and is in contact with the first tab 21, and the extended position (namely, a position protruding from a surface of the pole core 2) of the second tab 22 is close to a middle portion of the pole core 2, to shorten a current path. Therefore, practicality of the cell 100 can be improved.

In some embodiments of the present disclosure, a protruding height of the connecting protrusion 32 is f, a thickness of the second tab 22 is h, and f satisfies: f≥h+0.5 mm. For example, referring to FIG. 1, a protruding height of the connecting protrusion 32 may be set to f, a thickness of the second tab 22 may be set to h, and f satisfies: f≥h+0.5 mm. In other words, a difference between the protruding height of the connecting protrusion 32 and the thickness of the second tab 22 is greater than or equal to 0.5 mm, for example, 0.6 mm, 0.8 mm, or 1 mm. This is not limited in the present disclosure. Through the foregoing arrangement, after the second tab 22 falls onto the first side wall 3a, a side of the second tab 22 facing the housing 1 may be spaced apart from the housing 1, to avoid poor contact between the connecting protrusion 32 and the housing 1, ensure connection reliability between the connecting protrusion 32 and the housing 1, and improve overall quality of the cell 100.

It should be noted that each second tab 22 may be set to a multi-layer structure, a quantity of layers of the second tab 22 is set to c, a thickness of a single layer is set to d, and h is equal to d*c. In this way, the quantity of layers of the second tab 22 may be adjusted to adjust the thickness of the second tab 22. This helps meet different operating conditions.

In some embodiments of the present disclosure, as shown in FIG. 2, the connecting protrusion 32 may be constructed as a ring shape or a rectangular shape, and a thickness of the connecting protrusion 32 may be set to 2 mm to 3 mm, for example, 2.1 mm, 2.2 mm, or 2.3 mm. The thickness herein is a wall thickness of the connecting protrusion 32 in a direction from a center of the current collecting disk 3 to an outer side of the current collecting disk 3. Through the foregoing arrangement, the connecting protrusion 32 can have sufficient structural strength, which helps improve reliability of the current collecting disk 3, and a sufficient contact area can be provided between the connecting protrusion 32 and the housing 1, which helps improve connection stability between the connecting protrusion 32 and the housing 1, and improves the reliability of the cell 100.

In some embodiments of the present disclosure, the second tab 22 is located on a side of the first tab 21 facing away from the center of the pole core 2, and an avoiding through hole 31 is formed in a middle portion of the current collecting disk 3. For example, referring to FIG. 4, the second tab 22 is spaced on a side of the first tab 21 facing away from the center of the pole core 2, an avoiding through hole 31 is provided in a middle portion of the current collecting disk 3, and the first tab 21 passes through the avoiding through hole 31 in an insulation manner and is connected to the battery post 13 through welding. Through the foregoing arrangement, at any mounting angle, the current collecting disk 3 or the battery post 13 is not conductively connected to both the first tab 21 and the second tab 22, so that a short circuit can be avoided, thereby helping reduce assembly difficulty of the pole core 2, and improving a yield rate of the cell 100.

In some embodiments of the present disclosure, a plurality of first tabs 21 are arranged at intervals in a circumferential direction of the pole core 2; and/or a plurality of second tabs 22 are arranged at intervals in the circumferential direction of the pole core 2. For example, referring to FIG. 1, FIG. 3, and FIG. 4, a plurality of first tabs 21 may be arranged. The plurality of first tabs 21 are spaced in a circumferential direction of the pole core 2, and the plurality of first tabs 21 are configured to conductively connect to the battery post 13 together. In addition, a plurality of second tabs 22 may be arranged. The plurality of second tabs 22 are spaced in the circumferential direction of the pole core 2, and the plurality of second tabs 22 are configured to conductively connect to the current collecting disk 3 separately. Through the foregoing arrangement, a resistance of the cell 100 can be reduced, thereby improving the practicality of the cell 100.

In some embodiments of the present disclosure, extended positions of the plurality of first tabs 21 may be set to be located on a first circle, and a radian of each first tab 21 ranges from 0.35 rad to 0.45 rad; and/or extended positions of the plurality of second tabs 22 are located on a second circle, and a radian of each second tab 22 ranges from 0.35 rad to 0.45 rad.

For example, as shown in FIG. 1 to FIG. 4, extended positions of the plurality of first tabs 21 may be set to be located on a first circle, and a radian of each first tab 21 may be set to range from 0.35 rad to 0.45 rad. For example, the radian of the first tab 21 may be 0.37 rad. Alternatively, the radian of the first tab 21 may be 0.40 rad. Alternatively, the radian of the first tab 21 may be 0.43 rad. This is not limited in the present disclosure.

In addition, extended positions of the plurality of second tabs 22 may be set to be located on a second circle, the second circle is located on an outer side of the first circle in a radial direction, and a radian of each second tab 22 may be set to range from 0.35 rad to 0.45 rad. For example, the radian of the second tab 22 may be 0.37 rad. Alternatively, the radian of the second tab 22 may be 0.40 rad. Alternatively, the radian of the second tab 22 may be 0.43 rad. This is not limited in the present disclosure.

Through the foregoing arrangement, the first tab 21 and the second tab 22 can have appropriate radians, to avoid a case that welding of the first tab 21 and the second tab 22 is difficult due to excessively small radians, and avoid tearing of the first tab 21 and the second tab 22 during mounting caused by excessively large radians, so as to improve design rationality of the cell 100.

Further, as shown in FIG. 3, a quantity of first tabs 21 and a quantity of second tabs 22 may be the same, a plurality of first tabs 21 and a plurality of second tabs 22 face each other in a radial direction, and a radian of the first tab 21 is the same as a radian of the second tab 22. In a specific processing process, tab parts may be respectively processed on same sides of a positive electrode plate and a negative electrode plate through laser die cutting, and then the positive electrode plate, the negative electrode plate, and a membrane are wound together to process the pole core 2. In this case, the tab part is wound into a cylindrical shape, and the tab part may be cut through laser die cutting to respectively process the first tab 21 and the second tab 22.

Through the foregoing arrangement, processing difficulty of the first tab 21 and the second tab 22 can be reduced, thereby improving reliability of the cell 100.

In some embodiments of the present disclosure, a winding center hole 23 is formed in the pole core 2, and at least a part of at least one first tab 21 covers at least a part of the winding center hole 23. For example, referring to FIG. 1 to FIG. 4, the pole core 2 is formed by winding. A winding center hole 23 is formed in a middle portion of the pole core 2, the battery post 13 is opposite to the winding center hole 23, the plurality of first tabs 21 are all located on an outer side of the winding center hole 23 in a radial direction, and the plurality of first tabs 21 fall inward to extend toward the winding center hole 23, so that at least a part of at least one first tab 21 covers at least a part of the winding center hole 23, and the part of the first tab 21 covering the winding center hole 23 is opposite to the battery post 13 and is connected to the battery post 13 through welding, to implement a conductive connection between the first tab 21 and the battery post 13.

Through the foregoing arrangement, the first tab 21 can be positioned, to ensure that the first tab 21 can be in contact with the battery post 13 after the pole core 2 is mounted in the accommodating cavity, so that connection reliability between the battery post 13 and the first tab 21 is improved. In addition, during welding, a welding head needle may weld a contact position from the other end of the pole core 2 through the winding center hole 23, with low welding difficulty. This helps improve design rationality of the cell 100.

In some embodiments of the present disclosure, each first tab 21 has a covering portion covering the winding center hole 23, and a plurality of covering portions overlap and are conductively connected to the battery post 13.

For example, referring to FIG. 4, the plurality of first tabs 21 may be set to fall inward and extend to the winding center hole 23, so that each first tab 21 has a covering portion covering the winding center hole 23. The covering portions of the plurality of first tabs 21 overlap in an axial direction of the pole core 2. After the pole core 2 is mounted in the accommodating cavity, the plurality of covering portions may be in contact with and connected to the battery post 13 through welding. Specifically, the plurality of covering portions may be partially welded together, and some covering portions close to the battery post 13 are connected to the battery post 13 through welding. Alternatively, the plurality of covering portions may be all connected to the battery post 13 through welding. This is not limited in the present disclosure. Therefore, it can be ensured that the plurality of first tabs 21 may be all conductively connected to the battery post 13. This helps improve reliability of the cell 100.

In some embodiments of the present disclosure, the pole core 2 is cylindrical, a radius of the pole core 2 is R, a radius of the winding center hole 23 is r, an extension length of the first tab 21 is L1, and L1 satisfies: L1=R*a1+a2*r. a1 ranges from 0.35 to 0.45, and a2 ranges from 1.1 to 1.5.

For example, referring to FIG. 1 and FIG. 2, the pole core 2 is constructed as a cylinder, a radius of the pole core 2 may be set to R, and the radius R of the pole core 2 may generally range from 15 mm to 40 mm. A radius of the winding center hole 23 may be set to r. Extended positions of the plurality of first tabs 21 may be set to a first circle, and a radius r1 of the first circle ranges from 0.35R to 0.45R. In addition, an extension length of the first tab 21 may be set to L1, and L1 satisfies: L1=R*a1+a2*r. a1 ranges from 0.35 to 0.45, and a2 ranges from 1.1 to 1.5. Herein, it should be noted that, radii of the first circle and the second circle refer to radii from centers of circles in which the extended positions are located to inner side surfaces of corresponding tabs. The inner side surfaces are surfaces of sides of the tabs facing a center of the pole core 2.

Specifically, when the radius r1 of the first circle is 0.4R, a1 may be 0.4, and a2 may be 1.3, so that the extension length L1 of the first tab 21 is 0.4 times the radius R of the pole core 2 plus 1.3 times the radius r of the winding center hole 23. Alternatively, a1 may be 0.4, and a2 may be 1.4, so that the extension length L1 of the first tab 21 is 0.4 times the radius R of the pole core 2 plus 1.4 times the radius r of the winding center hole 23. This is not limited in the present disclosure.

When the radius r1 of the first circle is 0.42R, a1 may be 0.42, and a2 may be 1.3, so that the extension length L1 of the first tab 21 is 0.42 times the radius R of the pole core 2 plus 1.3 times the radius r of the winding center hole 23. Alternatively, a1 may be 0.42, and a2 may be 1.4, so that the extension length L1 of the first tab 21 is 0.42 times the radius R of the pole core 2 plus 1.4 times the radius r of the winding center hole 23. This is not limited in the present disclosure.

Through the foregoing arrangement, it can be ensured that at least a part of the first tab 21 covers the winding center hole 23, so that the first tab 21 may be stably connected to the battery post 13, and a case that the first tab 21 is excessively long can be avoided, to save materials. This helps reduce interference between the plurality of first tabs 21, thereby improving reliability of the cell 100.

In some embodiments of the present disclosure, as shown in FIG. 4, each second tab 22 may be set to be bent in a direction facing away from the center of the pole core 2 and attached to a side of the current collecting disk 3 away from the pole core 2. Through the foregoing arrangement, a conductive connection between the second tab 22 and the first tab 21 can be avoided, and a distance between the second tab 22 and the middle portion of the pole core 2 can be shortened, thereby shortening a current path, and improving conductive performance of the cell 100.

In some embodiments of the present disclosure, the pole core 2 is cylindrical, a radius of the pole core 2 is R, an extension length of the second tab 22 is L2, and L2 satisfies: L2=a3*R. a3 ranges from 0.2 to 0.3.

For example, referring to FIG. 1 to FIG. 4, the pole core 2 is cylindrical, a radius of the pole core 2 is set to R, a radius of a second circle ranges from 0.65R to 0.75R, an extension length of the second tab 22 is L2, and L2 satisfies: L2=a3*R. a3 ranges from 0.2 to 0.3. For example, when the radius r2 of the second circle is 0.6R, a1 may be 0.29R, so that the extension length L2 of the second tab 22 is 0.21 times the radius R of the pole core 2. Alternatively, when the radius r2 of the second circle is 0.74, a1 may be 0.21, so that the extension length L2 of the second tab 22 is 0.21 times the radius R of the pole core 2. This is not limited in the present disclosure.

Through the foregoing arrangement, a sufficient contact surface is provided between the second tab 22 and the current collecting disk 3. This helps reduce a resistance, and a case that the second tab 22 extends to an outer side of the pole core 2 in a radial direction after falling can be avoided, to prevent the second tab 22 from interfering with a mounting process and improve reliability of the cell 100.

In some embodiments of the present disclosure, a radius of the pole core 2 is R, extended positions of the plurality of first tabs 21 are located on a first circle, extended positions of the plurality of second tabs 22 are located on a second circle, a radius of the first circle is r1, a radius of the second circle is r2, and r1 and r2 satisfy: r1=R*a4, and r2=R*a5. a4 ranges from 0.35 to 0.45, and a5 ranges from 0.65 to 0.75.

For example, referring to FIG. 1 and FIG. 4, a radius of the pole core 2 may be set to R, extended positions of the plurality of first tabs 21 are located on a first circle, and extended positions of the plurality of second tabs 22 are located on a second circle, the first circle and the second circle extend in a circumferential direction of the pole core 2, and the second circle is located on an outer side of the first circle in a radial direction. A radius of the first circle may be set to r1, a radius of the second circle may be set to r2, and r1 and r2 satisfy: r1=R*a4, and r2=R*a5. a4 ranges from 0.35 to 0.45, and a5 ranges from 0.65 to 0.75. For example, a4 may be 0.4, the radius r1 of the first circle is set to 0.4R, a5 may be 0.7, and the radius of the second circle is set to 0.7R, so that a distance between the first tab 21 and the second tab 22 is set to 0.3R.

Through the foregoing arrangement, a sufficient gap can be provided between the first tab 21 and the second tab 22, to avoid a short circuit caused by a conductive connection between the first tab 21 and the second tab 22. This helps improve reliability of the cell 100.

Further, as shown in FIG. 1 and FIG. 2, the cell 100 further includes an insulating spacer 5. The insulating spacer 5 is sandwiched between the end portion of the pole core 2 and the housing 1, and the insulating spacer 5 is configured to separate the first tab 21 from the second tab 22, to avoid a conductive connection between the first tab 21 and the second tab 22. Therefore, reliability of the cell 100 can be improved.

Specifically, manufacturing steps of the cell 100 are as follows.

In a first step, laser die cutting is first performed on a positive electrode plate and a negative electrode plate of the cell 100, to process tab parts on same sides of the positive electrode plate and the negative electrode plate respectively. Sizes of the tab parts are obtained through calculation according to the first tab 21, the second tab 22, a membrane, and an effect that needs to be presented after actual winding.

In a second step, the positive electrode plate, the negative electrode plate, and the membrane are wound together to form the pole core 2. The positive electrode plate and the negative electrode plate are separated by the membrane, the tab part of the positive electrode plate and the tab part of the negative electrode plate are located at a same end of the pole core 2, and the tab parts are wound into multi-layer cylindrical shapes. It should be noted that the membrane protrudes from two ends of the pole core 2 to completely separate the positive electrode plate from the negative electrode plate.

In a third step, the tab parts are processed by using a hardware cutter or through laser die cutting, to respectively process a plurality of first tabs 21 and a plurality of second tabs 22 on the same end of the pole core 2. The plurality of first tabs 21 are evenly distributed in a ring shape, the second tab 22 is located on a side of the first tab 21 facing away from the center of the pole core 2, and the plurality of second tabs 22 are evenly distributed in a ring shape. It should be noted that the first tab 21 and the second tab 22 each a multi-layer structure distributed in a radial direction.

In a fourth step, ultrasonic pre-welding is separately performed on the first tab 21 and the second tab 22, to form the first tab 21 and the second tab 22 into a whole. The plurality of first tabs 21 are stacked in sequence after falling toward the winding center hole 23 in a radial direction. The second tab 22 passes through the through hole 33 and extends to a side of the current collecting disk 3 facing away from the pole core 2. The second tab 22 may fall outward onto the first side wall 3a of the current collecting disk 3 in the radial direction, and then the second tab 22 is welded to the current collecting disk 3 through laser with relatively low intensity. Then, the insulating spacer 5 may be placed on the end surface of the pole core 2, and then the pole core 2 is mounted into the accommodating cavity, so that the first tab 21 abuts against the battery post 13, and a welding head needle is placed from the other end of the pole core 2 through the winding center hole 23. The welding head needle is configured to perform ultrasonic torque welding on a contact position between the first tab 21 and the battery post 13, to weld the first tab 21 and the battery post 13 together.

In a fifth step, the cover plate part 12 and the main body part 11 are assembled, after the assembly is completed, laser sealing welding is performed on a connection position between the cover plate part 12 and the main body part 11 in a circumferential direction of the cover plate part 12, and keyhole welding is performed on the housing 1 and the current collecting disk 3 through a welding groove 111. Therefore, processing of the cell 100 can be completed.

The present disclosure further provides a battery pack.

The battery pack according to the embodiments of the present disclosure includes: the cell 100 according to any one of the foregoing embodiments and a housing. The cell 100 is arranged in the housing, and the housing is configured to protect the cell 100, so that direct impact on the cell 100 when the battery pack collides can be avoided.

According to the battery pack in the embodiments of the present disclosure, the first tab 21 is set to be directly conductively connected to the battery post 13, and the second tab 22 is set to be conductively connected to the housing 1 through the current collecting disk 3. This helps reduce a quantity of parts, reduce mounting difficulty, and improve a yield rate of the cell 100, and helps improve practicality of the cell 100 and ensure reliability of the battery pack.

The present disclosure further provides a power consumption device.

The power consumption device according to the embodiments of the present disclosure includes: the battery pack according to any one of the foregoing embodiments or the cell 100 according to any one of the foregoing embodiments, and a power consumption body. The battery pack or the cell 100 is arranged in the power consumption body. For example, the power consumption body may be a new energy vehicle, a hybrid vehicle, an aircraft, an energy storage cabinet, or the like.

According to the power consumption device in the embodiments of the present disclosure, the first tab 21 is set to be directly conductively connected to the battery post 13, and the second tab 22 is set to be conductively connected to the housing 1 through the current collecting disk 3. This helps reduce a quantity of parts, reduce mounting difficulty, and improve the yield rate of the cell 100, and helps improve practicality of the cell 100, ensure reliability of the battery pack, and improve overall performance of the power consumption device.

In the descriptions of the present disclosure, it should be understood that orientations or position relationships indicated by terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial direction", "radial direction", and "circumferential direction" are orientations or position relationships shown based on the accompanying drawings, and are merely used for the convenience of describing the present disclosure and simplifying the descriptions, rather than indicating or implying that the apparatus or an element should have a particular orientation or be constructed and operated in a particular orientation, and therefore, should not be construed as a limitation on the present disclosure.

In the descriptions of the present disclosure, a "first feature" or a "second feature " may include one or more features.

In the descriptions of the present disclosure, "multiple" means two or more than two.

In the descriptions of the present disclosure, a first feature is "on" or "under" a second feature may include that the first and second features are in direct contact, or may include that the first and second features are not in direct contact but in contact by using other features therebetween.

In the descriptions of the present disclosure, that the first feature is "above" the second feature includes that the first feature is right above the second feature and is not right above the second feature, or merely represents that a horizontal height of the first feature is higher than the second feature.

In the descriptions of this specification, the descriptions of the reference terms such as "an embodiment", "some embodiments", "exemplary embodiments", "example", "specific example", or "some examples" mean that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person skilled in the art can understand that the above embodiments cannot be construed to limit the present disclosure, and changes, alternatives, and modifications can be made in the embodiments without departing from the principle and the purpose of the present disclosure.

## Claims

1. A cell (100), comprising:
a housing (1), an accommodating cavity being formed in the housing (1), a battery post (13) being arranged on an end of the housing (1), and the battery post (13) being insulated from the housing (1);
a pole core (2), the pole core (2) being mounted in the accommodating cavity, and a first tab (21) and a second tab (22) being arranged on an end portion of the pole core (2) corresponding to the battery post (13); and
a current collecting disk (3), the current collecting disk (3) being sandwiched between the housing (1) and the end portion of the pole core (2), an avoiding through hole (31) being formed in the current collecting disk (3), the first tab (21) passing through the avoiding through hole (31) and being conductively connected to the battery post (13), and the current collecting disk (3) being conductively connected to the second tab (22) and the housing (1) respectively.

2. The cell (100) according to claim 1, wherein a connecting protrusion (32) protruding toward the housing (1) is arranged on a first side wall (3a) of the current collecting disk (3), and the connecting protrusion (32) is conductively connected to the housing (1).

3. The cell (100) according to claim 2, wherein an avoiding space (4) is provided between the first side wall (3a) of the current collecting disk (3) and an inner wall of the housing (1), a through hole (33) is provided on the current collecting disk (3), and the second tab (22) extends into the avoiding space (4) through the through hole (33) and is conductively connected to the first side wall (3a).

4. The cell (100) according to claim 3, wherein a part of the second tab (22) conductively connected to the first side wall (3a) is located on a side of the through hole (33) facing away from a center of the pole core (2).

5. The cell (100) according to claim 3, wherein a protruding height of the connecting protrusion (32) is f, a thickness of the second tab (22) is h, and f satisfies: f≥h+0.5 mm.

6. The cell (100) according to claim 3, wherein a thickness of the connecting protrusion (32) ranges from 2 mm to 3 mm.

7. The cell (100) according to claim 1, wherein the second tab (22) is located on a side of the first tab (21) facing away from a center of the pole core (2), and the avoiding through hole (31) is formed in a middle portion of the current collecting disk (3).

8. The cell (100) according to any one of claims 1 to 7, a plurality of first tabs (21) are arranged at intervals in a circumferential direction of the pole core (2); and/or a plurality of second tabs (22) are arranged at intervals in the circumferential direction of the pole core (2).

9. The cell (100) according to claim 8, wherein extended positions of the plurality of first tabs (21) are located on a first circle, and a radian of each first tab (21) ranges from 0.35 rad to 0.45 rad; and/or
extended positions of the plurality of second tabs (22) are located on a second circle, and a radian of each second tab (22) ranges from 0.35 rad to 0.45 rad.

10. The cell (100) according to claim 8, wherein a winding center hole (23) is formed in the pole core (2), and at least a part of at least one first tab (21) covers at least a part of the winding center hole (23).

11. The cell (100) according to claim 10, wherein each first tab (21) has a covering portion covering the winding center hole (23), and a plurality of covering portions overlap and are conductively connected to the battery post (13), preferably wherein the pole core (2) is cylindrical, a radius of the pole core (2) is R, a radius of the winding center hole (23) is r, an extension length of the first tab (21) is L1, and L1 satisfies: L1=R*a1+a2*r, wherein a1 ranges from 0.35 to 0.45, and a2 ranges from 1.1 to 1.5.

12. The cell (100) according to claim 8, wherein each second tab (22) is bent in a direction facing away from the center of the pole core (2) and is attached to a side of the current collecting disk (3) away from the pole core (2), preferably wherein the pole core (2) is cylindrical, a radius of the pole core (2) is R, an extension length of the second tab (22) is L2, and L2 satisfies: L2=a3*R, wherein a3 ranges from 0.2 to 0.3.

13. The cell (100) according to claim 8, wherein a radius of the pole core (2) is R, extended positions of the plurality of first tabs (21) are located on a first circle, extended positions of the plurality of second tabs (22) are located on a second circle, a radius of the first circle is r1, a radius of the second circle is r2, and r1 and r2 satisfy: r1=R*a4, and r2=R*a5, wherein a4 ranges from 0.35 to 0.45, and a5 ranges from 0.65 to 0.75.

14. A battery pack, comprising: the cell (100) according to any one of claims 1 to 13 and a housing, the cell (100) being arranged in the housing.

15. A power consumption device, comprising the battery pack according to claim 14 or the cell (100) according to any one of claims 1 to 13, and a power consumption body, the battery pack or the cell (100) being arranged in the power consumption body.
